# EUROPEAN PATENT APPLICATION

(11) **EP 2 613 619 A1**
(43) Date of publication of application: **10.07.2013**
(21) Application number: 11821265.3
(22) Date of filing: 15.08.2011
(51) Int. Cl.: H05K 7/20, H01M 2/10, H01M 10/50

(54) **HEAT-DISSIPATING CASE AND LITHIUM BATTERY PACK USING SAME, AND SEMI-CONDUCTING TAPE FOR HEAT DISSIPATION**

(30) Priority: 31.08.2010 JP 2010193540
(71) Applicant: Nitto Denko Corporation, Osaka 567-8680 (JP)
(72) Inventor: TAGAWA, Kenichi, Ibaraki-shi Osaka 567-8680 (JP); TAKAYAMA, Yoshinari, Ibaraki-shi Osaka 567-8680 (JP); NOUMI, Shunsuke, Ibaraki-shi Osaka 567-8680 (JP)
(74) Representative: Hart-Davis, Jason
(86) International application number: PCT/JP2011/004588
(87) International publication number: WO 2012/029240

(57) **Abstract**

The heat dissipating housing (1) of the present invention includes a housing body (11) made of metal, and a first semiconducting tape for heat dissipation (12) attached to at least a part of the inner wall of the housing body (11). The first semiconducting tape for heat dissipation (12) includes a fluoropolymer substrate (13) containing carbon black, and an adhesive layer (14) formed on the fluoropolymer substrate (13).

## Description

### TECHNICAL FIELD

The present invention relates to a heat dissipating housing suitable for accommodating heating elements and a lithium battery pack using the same, and a semiconducting tape for heat dissipation.

### BACKGROUND ART

Heat dissipation films obtained by calcining cordierite or zeolite and plating the calcined plate with copper have high emissivity and heat conductivity. Therefore, such heat dissipation films have conventionally served to release heat generated from electronic components to the outside by being adhered, for example, to a substrate on which the electronic components are mounted, a housing surrounding them, etc.

Further, as another example of using a heat dissipation mechanism based on heat radiation, Patent Literature 1 discloses a technique for releasing heat generated from an electrochemical device such as a battery to the outside by forming a coating layer mainly composed of particles of inorganic oxides and/or silicate compounds on the electrochemical device, using the heat radiating function of the coating layer.

However, the temperature increase inside a housing is becoming more and more significant with the increase in the size of lithium batteries, etc. to be accommodated inside the housing. Accordingly, a further heat dissipation/cooling effect is desired in the conventional heat dissipation films and such a heat dissipation mechanism as proposed in Patent Literature 1. Thus, various structures and methods for heat dissipation/cooling have been proposed in order to suppress the temperature increase inside a housing. For example, Patent Literature 2 proposes a battery pack in which a hollow body that allows a cooling medium to circulate therein is provided in a housing so that the housing is cooled internally by the cooling medium. Patent Literature 3 proposes a structure in which a heat conductive tab is provided for a battery that accommodated in a housing so that heat inside the housing is released to the outside through the tab.

### CITATION LIST

### Patent Literature

Patent Literature 1: JP 2009-87875 A
Patent Literature 2: JP 2009-54297 A
Patent Literature 3: JP 2010-108932 A

### SUMMARY OF INVENTION

### Technical Problem

However, the heat dissipation/cooling structures proposed in Patent Literatures 2 and 3 require providing the hollow body inside the housing or providing the tab on an electrode, and thus are comparatively large scale. Therefore, it is necessary to provide an additional space inside the housing in the case of trying to enhance their systems for a further improvement in heat dissipation/cooling efficiency. Accordingly, there is a problem that such enhancement is impossible when the space is limited.

It is an object of the present invention to provide a housing that can achieve a higher heat dissipation/cooling effect more easily, without employing such large-scale structures as proposed in Patent Literatures 2 and 3. Further, it is another object of the present invention to provide a lithium battery pack that uses such a housing. Furthermore, it is still another object of the present invention to provide a tape for heat dissipation that facilitates the achievement of such a housing.

### Solution to Problem

The present invention provides a heat dissipating housing including: a housing body made of metal; and a first semiconducting tape for heat dissipation attached to at least a part of an inner wall of the housing body. In the heat dissipating housing, the first semiconducting tape for heat dissipation includes a fluoropolymer substrate containing carbon black and an adhesive layer formed on the fluoropolymer substrate.

Further, the present invention provides a lithium battery pack including: a single lithium battery or an assembled battery in which a plurality of single lithium batteries are connected to each other; and the above-mentioned heat dissipating housing of the present invention that accommodates the single lithium battery or the assembled battery therein.

Furthermore, the present invention provides a semiconducting tape for heat dissipation including: a fluoropolymer substrate containing carbon black; and an adhesive layer formed on the fluoropolymer substrate. In the semiconducting tape for heat dissipation, the fluoropolymer substrate has a total emissivity of at least 0.9 at a wavelength of 2 µm to 14 µm and a surface resistivity within the range of 1 × 10² to 1 × 10⁶ Ω/sq.

### Advantageous Effects of Invention

The first semiconducting tape for heat dissipation provided in the heat dissipating housing of the present invention includes a fluoropolymer substrate containing carbon black and has high heat emissivity. Accordingly, when heating elements such as a battery are accommodated inside the housing, the first semiconducting tape for heat dissipation attached to the inner wall of the housing body efficiently absorbs heat radiated from the heating elements at high temperature. The heat absorbed by the first semiconducting tape for heat dissipation is conducted to the entire housing body made of metal, and then released effectively from the entire housing body to the outside. In this way, the heat dissipating housing of the present invention can achieve a high heat dissipation/cooling effect, despite its simple and easy configuration obtained merely by attaching the first semiconducting tape for heat dissipation to the inner wall of the housing body.

The lithium battery pack of the present invention includes the heat dissipating housing of the present invention. The heat dissipating housing of the present invention can achieve a high heat dissipation/cooling effect as described above. Accordingly, the lithium battery pack of the present invention can efficiently dissipate heat to the outside even when the amount of heat generated from the accommodated single lithium batteries or assembled battery increases. Therefore, it is possible to suppress problems resulting from the temperature increase inside the housing, such as battery failure.

The semiconducting tape for heat dissipation of the present invention can improve the heat dissipation performance of a component by being attached to the component whose heat dissipation performance is intended to be improved, such as a housing, which is a simple and easy method, and further can impart semiconductivity thereto. Further, the semiconducting tape for heat dissipation of the present invention can be attached even to a component having a complex shape along the shape of the component, which eliminates need for a forming process, etc. Thus, the semiconducting tape for heat dissipation of the present invention has excellent handleability.

### BRIEF DESCRIPTION OF DRAWINGS

Fig. 1 is a sectional view showing one configuration example of a heat dissipating housing in Embodiment 1 of the present invention.
Fig. 2 is a sectional view showing another configuration example of the heat dissipating housing in Embodiment 1 of the present invention.
Fig. 3A is a perspective view schematically showing a configuration of a lithium battery pack in Embodiment 2 of the present invention.
Fig. 3B is a sectional view taken along line I-I of Fig. 3A.
Fig. 4A is a schematic diagram showing an evaluation apparatus in Example 1.
Fig. 4B is a schematic diagram showing an evaluation apparatus in Example 2.

### DESCRIPTION OF EMBODIMENTS

Hereinafter, the embodiments of the present invention are described with reference to the drawings. It should be noted that the present invention is not limited by the following descriptions.

### Embodiment 1

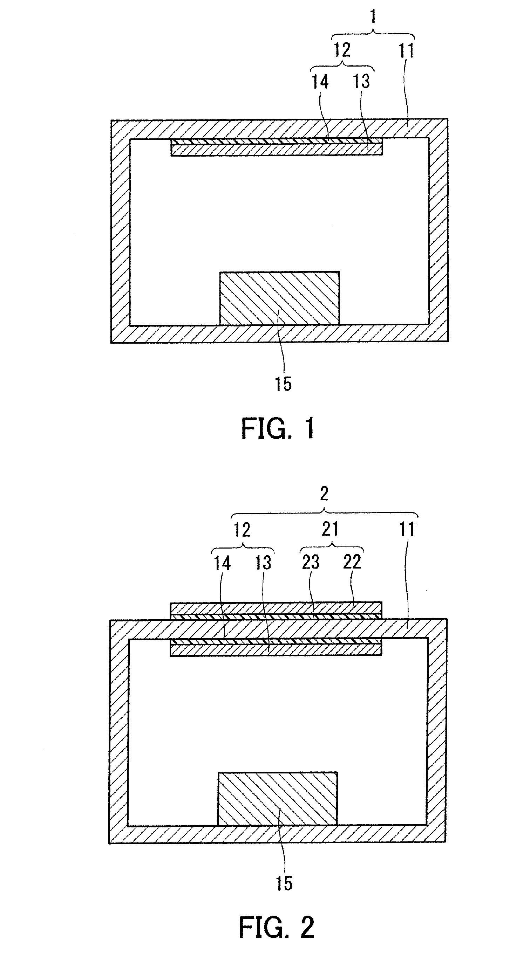

As shown in Fig. 1, a heat dissipating housing 1 of this embodiment includes a housing body 11 and a semiconducting tape for heat dissipation (first semiconducting tape for heat dissipation) 12 that is attached to at least a part of the inner wall of the housing body 11. The heat dissipating housing 1 accommodates a heating element 15 such as a battery therein.

The housing body 11 is made of metal, and a housing made of aluminium, for example, is used suitably therefor.

The semiconducting tape for heat dissipation 12 includes a fluoropolymer substrate 13 containing carbon black and an adhesive layer 14 formed on the fluoropolymer substrate 13, and is attached to the inner wall of the housing body 11 by the adhesive layer 14.

The fluoropolymer substrate 13 has high heat emissivity because it contains carbon black. Accordingly, the fluoropolymer substrate 13 can receive and absorb the heat radiated from the heating element 15 at high temperature efficiently by radiant heat transfer. The heat absorbed by the fluoropolymer substrate 13 is conducted to the entire housing body 11 made of metal, and then is dissipated from the entire housing body 11 to the outside. In order to receive the heat radiated from the heating element 15 more efficiently, the fluoropolymer substrate 13 preferably has a total emissivity of at least 0.9 at a wavelength of 2 µm to 14 µm.

The fluoropolymer substrate 13 is produced by mixing carbon black with fluoropolymer particles and dispersing it, followed by rolling. Although various fluoropolymers can be used, polytetrafluoroethylene (PTFE) is preferably used as the fluoropolymer particles. This is because the friction coefficient of the substrate surface is reduced to a very low level, which can suppress wear of the substrate sufficiently even if the substrate is situated in such a way as to slide with respect to another member. Further, PTFE has excellent chemical resistance, weather resistance, etc., as well, and therefore is very preferable in order to ensure long-term reliability of a product.

Carbon black to be contained in the fluoropolymer substrate 13 is not particularly limited as long as it has semiconductivity, high heat conductivity, and excellent dispersibility. By allowing carbon black to be contained in the fluoropolymer substrate 13, semiconductivity can be imparted thereto. This semiconductivity allows static charge to be generated by friction between components in the process of manufacturing a product using the heat dissipating housing 1 to be eliminated via the heat dissipating housing 1. Therefore, for example, when the heat dissipating housing 1 is applied to a precision component, it is possible not only to mitigate the occurrence of short circuit and noise resulting from static electrification in manufacturing the precision component, but also to obtain an additional effect of reducing the risk of fire in the case of the presence of a component that is susceptible to ignition in the surroundings. Particularly, when the heating element 15 accommodated therein is a lithium battery, the semiconductivity imparted to the fluoropolymer substrate 13 prevents charge-up during assembly and makes failure of the lithium battery less likely to occur. Moreover, when the heat dissipating housing 1 is applied to a precision component, the incorporation of dust, dirt, and the like can be prevented due to the antistatic effect caused by the semiconductivity. In order to allow such effects to be obtained sufficiently, the fluoropolymer substrate 13 preferably has a surface resistivity of 1 × 10² to 1 × 10⁶ Ω/sq.

The filling amount of carbon black in the fluoropolymer substrate 13 is preferably at least 1 part by weight but not more than 50 parts by weight with respect to 100 parts by weight of fluoropolymer. Further preferably, it is at least 1 part by weight but not more than 30 parts by weight. When it is less than 1 part by weight, the semiconductivity and the heat conductivity of the fluoropolymer substrate 13 may excessively decrease in some cases. When it exceeds 50 parts by weight, the mechanical strength of the fluoropolymer substrate 13 may excessively decrease in some cases.

As the fluoropolymer substrate 13 in this embodiment, NITOFLON (registered trademark) No. 903SC (manufactured by NITTO DENKO CORPORATION), for example, can be used suitably.

For the adhesive layer 14, known acrylic adhesives or silicone adhesives can be used. Acrylic adhesives are suitable for application at comparatively low temperature. Silicone adhesives have excellent cold resistance and heat resistance, and thus are suitable for application in a lower temperature range and a higher temperature range than the temperature at which acrylic adhesives are suitably used.

The position to which the semiconducting tape for heat dissipation 12 is attached is not particularly limited, but it is preferably a position that faces the heating element 15 so as to allow heat to be easily received. Further, the area of the semiconducting tape for heat dissipation 12 also is not particularly limited, but a larger area is desirable in consideration of the heat receiving effect.

Although the semiconducting tape for heat dissipation 12 is attached only to the inner wall of the housing body 11 in the heat dissipating housing 1 shown in Fig. 1, an additional semiconducting tape for heat dissipation (second semiconducting tape for heat dissipation) 21 may be attached to at least a part of the outer wall of the housing body 11, as in a heat dissipating housing 2 shown in Fig. 2. The semiconducting tape for heat dissipation 21 is desirably disposed at a position that faces the semiconducting tape for heat dissipation 12 with the housing body 11 interposed therebetween, so as to allow heat to be easily transferred from the semiconducting tape for heat dissipation 12. The semiconducting tape for heat dissipation 21 includes, as does the semiconducting tape for heat dissipation 12, a fluoropolymer substrate 22 containing carbon black, and an adhesive layer 23 formed on the fluoropolymer substrate 22. The fluoropolymer substrate 22 and the adhesive layer 23 are respectively the same as the fluoropolymer substrate 13 and the adhesive layer 14, and therefore the detailed descriptions thereof are omitted.

The further attachment of the semiconducting tape for heat dissipation 21 to the outer wall of the housing body 11 adds a heat dissipation effect due to heat radiation from the semiconducting tape for heat dissipation 21, thereby allowing a further heat dissipation/cooling effect to be obtained.

### Embodiment 2

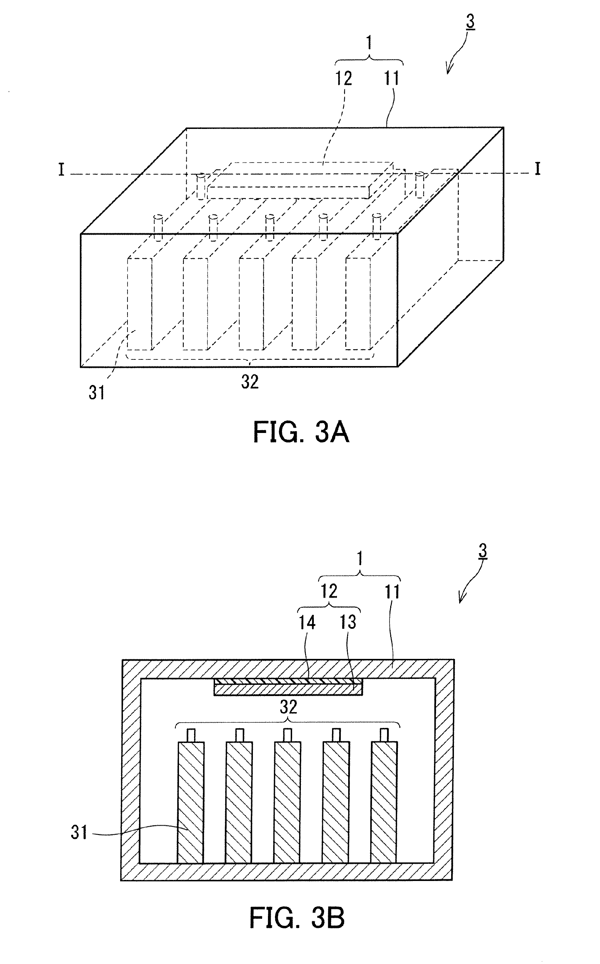

Fig. 3A shows a schematic diagram of a lithium battery pack 3 of this embodiment, and Fig. 3B shows a sectional view taken along line I-I of Fig. 3A. The lithium battery pack 3 of this embodiment includes an assembled battery 32 in which a plurality of single lithium batteries 31 are connected to each other, and the heat dissipating housing 1 that accommodates the assembled battery 32 therein.

The single lithium batteries 31 herein each may be a lithium primary battery or a lithium ion secondary battery. Although the single battery 31 has a rectangular flat shape in this embodiment, the shape is not limited thereto. It may be a single lithium battery with another shape. Further, the arrangement of the plurality of single batteries 31 also is not limited to that shown in Fig. 3A and Fig. 3B. The plurality of single lithium batteries 31 may be connected to each other in a manner selected from serial connection and parallel connection appropriately, depending on the intended use. In this embodiment, a battery pack in which an assembled battery is accommodated inside the heat dissipating housing is described. However, a single lithium battery may be accommodated therein individually, instead of the assembled battery.

The lithium battery pack 3 of this embodiment is capable of efficient heat dissipation from the single lithium batteries 31 to the outside because it uses the heat dissipating housing 1 described in Embodiment 1. Accordingly, it is possible to suppress problems resulting from the temperature increase inside the housing, such as battery failure. There also is an effect to be obtained, as has been described in Embodiment 1, that the semiconductivity imparted to the fluoropolymer substrate 13 prevents charge-up during assembly and makes failure of the lithium battery less likely to occur. Moreover, when the lithium battery pack 3 is applied to a precision component, an effect to prevent the incorporation of dust, dirt, and the like can be obtained due to the antistatic effect caused by the semiconductivity.

### EXAMPLES

Next, the heat dissipating housing of the present invention is specifically described with reference to examples. The present invention is not limited by the following examples.

### Example 1

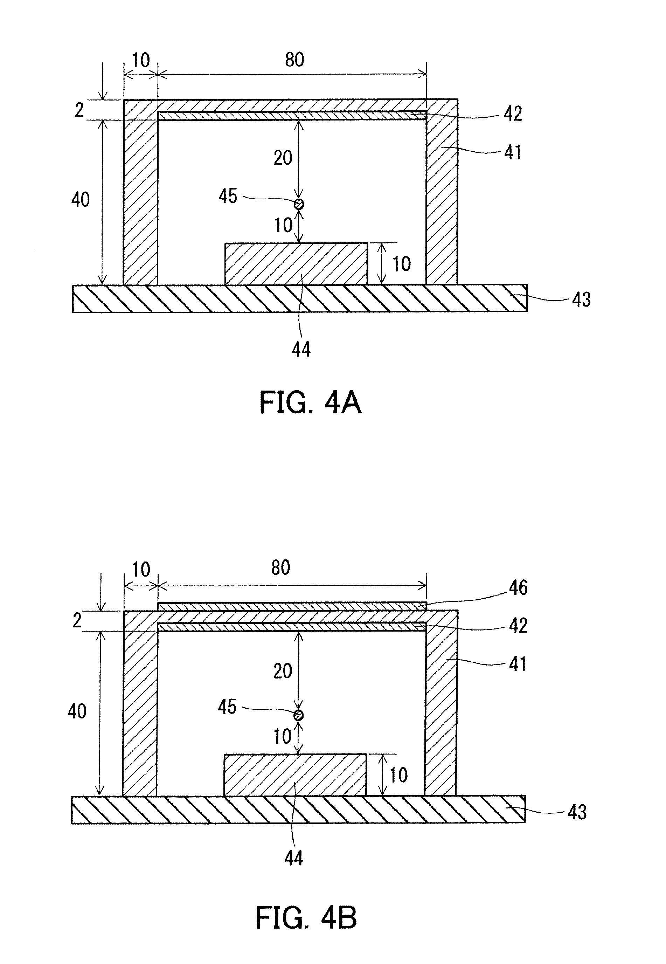

An aluminium housing 41 (with a heat conductivity of 140 W/mK and a total emissivity of 0.03 at a wavelength of 2 µm to 14 µm), as shown in Fig. 4A, having outer dimensions of a width of 100 mm, a depth of 100 mm, and a height of 42 mm, with the bottom surface being open was prepared. The aluminium housing 41 had internal dimensions of a width of 80 mm, a depth of 80 mm, and a height of 40 mm. As the first semiconducting tape for heat dissipation, NITOFLON (registered trademark) No. 903SC (manufactured by NITTO DENKO CORPORATION) 42 with a size of 80 mm × 80 mm was attached to the inner wall of the ceiling of the aluminium housing 41. That is, the semiconducting tape for heat dissipation was attached to the entire inner wall of the ceiling of the housing body in this example. NITOFLON (registered trademark) No. 903SC (manufactured by NITTO DENKO CORPORATION) had a heat conductivity of 1.28 W/mK (measured with "LFA 447 NanoFlash (registered trademark)" manuractured by NETZSCH), a thickness of 0.11 mm, a surface resistivity of 1.98 × 10⁴ Ω/sq (tested by the method prescribed in JIS K 7194), and a total emissivity of 0.952 at a wavelength of 2 µm to 14 µm. A heater 44 as a heating element was provided on a heat insulator 43, and the heater 44 was surrounded by the aluminium housing 41. Thus, a measuring apparatus as shown in Fig. 4A was produced. The output of the heater 44 was set to 20 W, and the spatial temperature inside the housing was measured with a thermocouple 45 positioned at a height of 20 mm from the surface of the heat insulator 43. The spatial temperature inside the housing was 157.25°C.

Further, the same measurement was carried out for the cases where only the size of the first semiconducting tape for heat dissipation was changed to 40 mm × 40 mm, and to 60 mm × 60 mm. The resultant spatial temperature for the above cases was 164.55°C and 161.95°C, respectively. These results in Example 1 demonstrated that the larger the area of the semiconducting tape for heat dissipation, the higher the heat dissipation effect thereof obtained.

### Example 2

As shown in Fig. 4B, NITOFLON (registered trademark) No. 903SC (manufactured by NITTO DENKO CORPORATION) 46 of 80 mm × 80 mm, as the second semiconducting tape for heat dissipation, was attached also to the outer wall of the ceiling of the aluminium housing 41. The spatial temperature was measured in the same manner as in Example 1 where the size of the first semiconducting tape for heat dissipation was set to 80 mm × 80 mm, except that the second semiconducting tape for heat dissipation was attached. The resultant spatial temperature inside the housing in Example 2 was 152.41°C, and a higher heat dissipation effect than in Example 1 where the semiconducting tape for heat dissipation was attached only to the inner wall was obtained.

Further, the same measurement was carried out also for a configuration in which the second semiconducting tape for heat dissipation with a size of 40 mm x 40 mm was further provided with respect to the measuring apparatus of Example 1 provided with the first semiconducting tape for heat dissipation with a size of 40 mm × 40 mm, and for a configuration in which the second semiconducting tape for heat dissipation with a size of 60 mm × 60 mm was further provided with respect to the measuring apparatus of Example 1 provided with the first semiconducting tape for heat dissipation with a size of 60 mm × 60 mm. The resultant spatial temperature for the above configurations was 161.32°C and 159.49°C, respectively. These results demonstrated, as in Example 1, that the larger the area of the semiconducting tape for heat dissipation, the higher the heat dissipation effect thereof obtained.

### Comparative Example 1

With the same configuration as the measuring apparatus of Example 1 except that no semiconducting tape for heat dissipation was attached, the spatial temperature was measured in the same manner as in Example 1. The resultant spatial temperature was 173.20°C.

### Comparative Example 2

The semiconducting tape for heat dissipation was attached only to the outer wall of the ceiling of the aluminium housing 41, while no semiconducting tape for heat dissipation was attached to the inner wall. Except that, the spatial temperature was measured in the same manner as in Example 2 with the same configuration as the measuring apparatus of Example 2. The resultant spatial temperature was 171.94°C.

The heat dissipating housings of Examples 1 and 2 had a significantly reduced spatial temperature compared to the housing of Comparative Example 1 where no semiconducting tape for heat dissipation was provided. Thus, a high heat dissipation effect was shown. Further, the comparison between Example 1 and Comparative Example 2 demonstrated that a higher heat dissipation effect can be obtained when the semiconducting tape for heat dissipation was attached to the inner wall of the housing body than when it was attached to the outer wall of the housing body. This is presumably because an efficient heat dissipation system was achieved, in which the heat radiated from the heating element at high temperature is absorbed effectively due to radiant heat transfer by the semiconducting tape for heat dissipation, as being attached to the inner wall of the housing body, and then is conducted further to the entire aluminium housing so as to be dissipated to the outside.

Further, the difference between the spatial temperature in Example 1 where the semiconducting tape for heat dissipation was attached only to the inner wall of the housing body and the spatial temperature in Example 2 where the semiconducting tape for heat dissipation was attached to the inner wall and outer wall of the housing body ((Spatial temperature in Example 1) - (Spatial temperature in Example 2)) was about 5°C. On the other hand, the difference between the spatial temperature in Comparative Example 1 where no semiconducting tape for heat dissipation was attached and the spatial temperature in Comparative Example 2 where the semiconducting tape for heat dissipation was attached only to the outer wall of the housing body ((Spatial temperature in Comparative Example 1)-(Spatial temperature in Comparative Example 2)) was about 1°C. This result shows that the heat dissipation effect to be obtained by the semiconducting tape for heat dissipation being attached to the outer wall of the housing body is significantly increased by combination with the configuration in which the semiconducting tape for heat dissipation was attached to the inner wall of the housing body, compared to the combination with the configuration in which the semiconducting tape for heat dissipation was provided only on the outer wall individually.

### INDUSTRIAL APPLICABILITY

The heat dissipating housing of the present invention can achieve a high cooling/heat dissipation effect despite its simple and easy configuration. Therefore, the heat dissipating housing of the present invention can be suitably used as a housing for accommodating a heating element such as a battery therein.

## Claims

1. A heat dissipating housing comprising:
a housing body made of metal; and
a first semiconducting tape for heat dissipation attached to at least a part of an inner wall of the housing body, wherein
the first semiconducting tape for heat dissipation includes a fluoropolymer substrate containing carbon black and an adhesive layer formed on the fluoropolymer substrate.

2. The heat dissipating housing according to claim 1, wherein
the fluoropolymer substrate has a total emissivity of at least 0.9 at a wavelength 2 µm to 14 µm and a surface resistivity within the range of 1 × 10² to 1 × 10⁶ Ω/sq, in the first semiconducting tape for heat dissipation.

3. The heat dissipating housing according to claim 1, further comprising:
a second semiconducting tape for heat dissipation attached to at least a part of the outer wall of the housing body, wherein
the second semiconducting tape for heat dissipation includes a fluoropolymer substrate containing carbon black and an adhesive layer formed on the fluoropolymer substrate.

4. The heat dissipating housing according to claim 3, wherein
the second semiconducting tape for heat dissipation is disposed at a position that faces the first semiconducting tape for heat dissipation with the housing body interposed therebetween.

5. The heat dissipating housing according to claim 3, wherein
the fluoropolymer substrate has a total emissivity of at least 0.9 at a wavelength 2 µm to 14 µm and a surface resistivity within the range of 1 × 10² to 1 × 10⁶ Ω/sq, in the second semiconducting tape for heat dissipation.

6. The heat dissipating housing according to claim 1, wherein
the adhesive layer in the first semiconducting tape for heat dissipation is composed of an acrylic adhesive or a silicone adhesive.

7. The heat dissipating housing according to claim 3, wherein
the adhesive layer in the second semiconducting tape for heat dissipation is composed of an acrylic adhesive or a silicone adhesive.

8. A lithium battery pack comprising:
a single lithium battery or an assembled battery including a plurality of single lithium batteries connected to each other; and
the heat dissipating housing according to claim 1, the heat dissipating housing accommodating the single lithium battery or the assembled battery therein.

9. A semiconducting tape for heat dissipation comprising:
a fluoropolymer substrate containing carbon black; and
an adhesive layer formed on the fluoropolymer substrate, wherein
the fluoropolymer substrate has a total emissivity of at least 0.9 at a wavelength of 2 µm to 14 µm and a surface resistivity within the range of 1 × 10² to 1 × 10⁶ Ω/sq.

10. The semiconducting tape for heat dissipation according to claim 9, wherein the adhesive layer is composed of an acrylic adhesive or a silicone adhesive.
